# EUROPEAN PATENT APPLICATION

(11) **EP 2 602 524 A1**
(43) Date of publication of application: **12.06.2013**
(21) Application number: 11814301.5
(22) Date of filing: 04.08.2011
(51) Int. Cl.: F16K 31/06, F02M 21/02, G05D 16/20, H01M 8/00, H01M 8/04

(54) **GAS PRESSURE REGULATING VALVE**

(30) Priority: 06.08.2010 JP 2010177867
(71) Applicant: Kawasaki Jukogyo Kabushiki Kaisha, Kobe-shi, Hyogo 650-8670 (JP)
(72) Inventor: NOMICHI, Kaoru, Hyogo 651-2239 (JP); SUZUKI, Yutaka, Hyogo 651-2239 (JP); NINOMIYA, Makoto, Hyogo 651-2239 (JP)
(74) Representative: Piésold, Alexander James
(86) International application number: PCT/JP2011/004437
(87) International publication number: WO 2012/017666

(57) **Abstract**

The present invention provides a gas pressure regulating valve capable of, even under a high-pressure fuel gas circumstance, more precisely regulating secondary pressure of the high-pressure fuel gas to target pressure and preventing the fuel gas from leaking to the atmosphere.

An electromagnetic pressure regulating valve 1 includes a valve body 14 and can cause the valve body 14 to move to adjust an opening degree of a valve passage 13, thereby regulating secondary pressure p₂ to target pressure. The valve body 14 is slidingly supported by a bearing member 18, and a diaphragm seal 19 and a low-pressure sealing member 20 respectively seal both sides of the bearing member 18. The diaphragm seal 19 receives the secondary pressure p₂ from a pressure return chamber 23, connected to a secondary port 12c, to cause the valve body 14 to move toward a closed position. A back pressure chamber 30 connected to a primary port 12a is formed by a seal rod 29 inserted in the valve body 14, and a buffer chamber 35 connected to the secondary port 12c is formed in a housing 12. A high-pressure sealing member 32 seals between the buffer chamber 35 and the back pressure chamber 30.

## Description

### Technical Field

The present invention relates to a gas pressure regulating valve configured to regulate the pressure of a high-pressure fuel gas to pressure corresponding to an applied voltage or an applied current.

### Background Art

Clean energy vehicles using fuel gases, such as a hydrogen gas and a natural gas, are known, and examples thereof include fuel-cell vehicles, hydrogen engine vehicles, and natural gas vehicles. The clean energy vehicle includes a high-pressure tank and one of an injector and an electromagnetic pressure regulating valve and runs in such a manner that the fuel gas stored in the high-pressure tank is supplied by the injector or the electromagnetic pressure regulating valve to a fuel cell or a gas engine. Each of the injector and the electromagnetic pressure regulating valve can adjust the flow rate (or the pressure) of the fuel gas supplied to the fuel cell or the gas engine. The output of the fuel cell or the gas engine is controlled by adjusting the flow rate (or the pressure) of the fuel gas by the injector or the electromagnetic pressure regulating valve.

The injector can close and open an injection hole thereof to adjust the flow rate of the fuel gas. The injector changes the flow rate of the fuel gas by a ratio between an open time of the injection hole and a closed time of the injection hole, that is, a duty ratio. If differential pressure between upstream pressure of the injector and output pressure of the injector is high, the flow rate of the fuel gas which flows when the injection hole of the injector is opened is extremely high, and the change in the flow rate of the fuel gas with respect to the change in the duty ratio of the injector is significant. Especially, in a low flow rate region (the fuel cell or the gas engine is in a low load state), a flow gain (a value obtained by dividing the flow rate of the fuel gas by the duty ratio) is large, and the control operation is difficult. In addition, another problem is that if the upstream pressure of the injector increases, the span of duty control for changing from a low flow rate to a high flow rate becomes extremely narrow.

The electromagnetic pressure regulating valve can adjust the opening degree (opening area) of a valve passage to adjust the flow rate of the fuel gas. Therefore, if the upstream pressure of the electromagnetic pressure regulating valve increases, differential pressure between an upstream side and downstream side of the electromagnetic pressure regulating valve increases. On this account, the flow rate of the fuel gas significantly changes only by slightly increasing the opening degree, and the change in the flow rate of the fuel gas with respect to the change in the opening degree of the valve passage is significant. Therefore, as with the injector, in the electromagnetic pressure regulating valve, the pressure control of the fuel gas in the low flow rate region (low load state) is extremely difficult.

To solve such difficult problems, two regulators are provided upstream of an injector in a fuel cell system disclosed in PTL 1. These two regulators are arranged in series and reduce the pressure of a hydrogen gas in two stages, the hydrogen gas being supplied from a high-pressure tank. In the fuel cell system, the upstream pressure of the injector is maintained at certain low pressure or lower by the two regulators, so that differential pressure between an upstream side and downstream side of the injector is low. Thus, the pressure controllability is secured. The fuel cell system includes a shutoff valve provided upstream of the two regulators. The shutoff valve can shut off communication between the hydrogen tank and the fuel cell to stop the supply of the hydrogen gas.

### Citation List

### Patent Literature

PTL 1: Japanese Laid-Open Patent Application Publication No. 2007-188857

### Summary of Invention

### Technical Problem

The fuel cell system described in PTL 1 requires a plurality of regulators in order to reduce the pressure of the fuel gas in multiple stages. However, if a plurality of regulators are provided, the number of components increases, and spaces for the regulators are required. Therefore, the size of the entire system increases, the cost increases, and the weight of the entire system increases. Especially, it is not preferable to install the above-described system in a vehicle in which spaces for components are limited and whose weight reduction is desired.

Moreover, by providing a plurality of regulators, the pressure loss of the system increases. Therefore, a service pressure limit of the high-pressure tank with respect to minimum working pressure of the fuel cell or the gas engine needs to be set to high pressure. In this case, the amount of fuel gas consumable in the high-pressure tank becomes smaller than that in a case where the regulators are not provided. Thus, the cruising distance of the vehicle decreases.

As above, the addition of a plurality of regulators causes various problems. Moreover, as described above, according to the conventional injector and the conventional electromagnetic pressure regulating valve, the pressure control of the fuel gas in the low load state is difficult when the upstream pressure of the conventional injector or the conventional electromagnetic pressure regulating valve is high.

Further, a diaphragm method may be used as a seal method of, for example, the electromagnetic pressure regulating valve. However, the pressure capacity of the diaphragm seal is generally small. Therefore, when handling the high-pressure fuel gas, the fuel gas may leak to the atmosphere by the failure of the diaphragm. In the case of an O ring method, the fuel gas may leak to the atmosphere by an unexpected external factor at the time of high pressure.

An object of the present invention is to provide a gas pressure regulating valve capable of, even under a high-pressure fuel gas circumstance, more precisely regulate secondary pressure of the high-pressure fuel gas to target pressure and preventing the fuel gas from leaking to the atmosphere.

### Solution to Problem

A gas pressure regulating valve of the present invention includes: a housing including a valve passage connected to a primary port and a secondary port; a valve body provided in the housing and configured to move between a closed position where the valve body closes the valve passage and an open position where the valve body opens the valve passage to adjust an opening degree of the valve passage; a return spring configured to bias the valve body in a direction toward the closed position; and a valve body driving unit configured to apply a driving force corresponding to an applied voltage or an applied current to the valve body against the biasing of the return spring to cause the valve body to move in a direction toward the open position, the gas pressure regulating valve being configured to regulate pressure of a high-pressure fuel gas, supplied through the primary port to the valve passage, to pressure corresponding to the driving force of the valve body driving unit to output the fuel gas through the secondary port, the gas pressure regulating valve including: a pressure return chamber formed in the housing and connected to the secondary port; a bearing member provided in a gap between the valve body and the housing and configured to slidingly support the valve body; first and second sealing members respectively provided on both sides of the bearing member and configured to respectively seal both sides of the gap; and a seal rod inserted in the valve body so as to be movable relative to the valve body and configured to form a back pressure chamber connected to the primary port, the back pressure chamber being formed between the seal rod and the valve body, wherein: the first sealing member receives pressure of the pressure return chamber in a direction against the driving force and causes the valve body to move toward the closed position in accordance with the received pressure; the housing includes a buffer chamber connected to the secondary port; and the third sealing member is provided so as to seal between the back pressure chamber and the buffer chamber.

According to the present invention, by changing the driving force of the valve body driving unit, the opening degree of the valve passage is changed. Thus, the secondary pressure can be regulated. The secondary pressure is being introduced to the pressure return chamber, and the first sealing member receives the secondary pressure of the pressure return chamber to cause the valve body to move toward the closed position. When the secondary pressure decreases in a state where the forces, such as the secondary pressure, the driving force, and the biasing force of the return spring, acting on the valve body are balanced, the first sealing member causes the valve body to move toward the open position to increase the opening degree of the valve passage, thereby increasing the secondary pressure. With this, the state where the forces acting on the valve body are balanced is realized again. By realizing this balance state, the secondary pressure is returned to original pressure. To be specific, the secondary pressure is returned to certain pressure corresponding to the driving force of the valve body driving unit and is maintained at the certain pressure regardless of the change in the primary pressure. Therefore, the gas pressure regulating valve has high pressure controllability and can more precisely regulate the pressure of the high-pressure fuel gas to the target pressure.

Moreover, in the present invention, since the back pressure chamber connected to the primary port is formed, the primary pressure acting on the valve body can be canceled by the pressure of the back pressure chamber, so that the change in the secondary pressure due to the change in the primary pressure can be suppressed. With this, the pressure controllability of the fuel gas can be improved, and the gas pressure regulating valve of the present invention can control the secondary pressure more precisely than the conventional gas pressure regulating valves.

Moreover, in the present invention, the buffer chamber is formed at a portion of the seal rod, the portion being located on the other side of the third sealing member. The buffer chamber is connected to the pressure return chamber. Therefore, even if the fuel gas flows between the seal rod and the valve body to leak through the back pressure chamber to the buffer chamber, the leaked fuel gas can be introduced to the secondary side, such as the pressure return chamber. As above, the gas pressure regulating valve has the safety structure by which the fuel gas having leaked from the back pressure chamber is introduced to the secondary side. Thus, the fuel gas can be prevented from being discharged to the outside.

Further, in the present invention, by providing the bearing member, the valve body can be caused to move smoothly, and the followability with respect to the target pressure can be improved. Then, the first sealing member and the second sealing member seal both sides of a space in which the bearing member is provided. With this, the fuel gas is prevented from flowing into the space, and the bearing member is prevented from being exposed to the fuel gas. Thus, a material having no corrosion resistance to the fuel gas can be used as a material of the bearing member, and this increases material options. Even if the bearing member is lubricated with grease, the grease does not flow out from the space by sealing the space. With this, the smooth movement of the valve body is realized, and the grease can be prevented from being mixed with the fuel gas.

In the above invention, it is preferable that the valve body include a first pressure receiving surface configured to receive primary pressure at the primary port toward the open position and a second pressure receiving surface configured to receive pressure of the back pressure chamber toward the closed position, and a pressure receiving area of the first pressure receiving surface be equal to a pressure receiving area of the second pressure receiving surface.

According to the above configuration, the primary pressure received by the valve body can be canceled by the pressure of the back pressure chamber. With this, the change in the secondary pressure due to the change in the primary pressure can be eliminated, and the pressure controllability of the secondary pressure can be further improved. Further, the driving force of the valve body driving unit can be reduced. Therefore, the gas pressure regulating valve can be reduced in size.

In the above invention, it is preferable that the valve body include a first pressure receiving surface configured to receive primary pressure at the primary port toward the open position and a second pressure receiving surface configured to receive pressure of the back pressure chamber toward the closed position, and a pressure receiving area of the first pressure receiving surface be smaller than a pressure receiving area of the second pressure receiving surface.

According to the above configuration, the acting force generated by the pressure of the back pressure chamber received by the valve body is larger than the acting force generated by the primary pressure received by the valve body. Therefore, the force corresponding to the primary pressure acts on the valve body in the close direction. On this account, even if the primary pressure rapidly changes and increases, the valve body does not move toward the open position, and the valve passage does not open. When the valve body driving unit does not operate, the valve passage can be closed firmly in order to prevent the fuel gas from leaking from the primary side to the secondary side.

In the above invention, it is preferable that the first sealing member be a diaphragm seal, and the second sealing member be a low-pressure seal having low frictional resistance.

According to the above configuration, by adopting a diaphragm seal as the first sealing member, the sliding friction by the first sealing member can be eliminated. In addition, by adopting as the second sealing member a low-pressure seal having low frictional resistance, the sliding friction can be suppressed. As above, by suppressing the sliding friction acting on the valve body, the valve body can be caused to move smoothly. With this, when, for example, the primary pressure has changed or the driving force has been changed, the secondary pressure can be quickly regulated to certain pressure corresponding to the driving force. Thus, the responsiveness of the secondary pressure is improved.

In the above invention, it is preferable that the third sealing member be a high-pressure seal which has low frictional resistance and in which a difference between starting resistance and sliding resistance is small.

According to the above configuration, the valve body can be caused to move smoothly, and the responsiveness of the valve body can be improved. Moreover, since a high-pressure seal is adopted as the third sealing member, the pressure resistance to the primary pressure is improved, and the limit pressure of the primary pressure supplied through the primary port can be improved.

In the above invention, it is preferable that the valve body driving unit include a driving portion configured to operate in accordance with an applied voltage or an applied current, a case configured to accommodate the driving portion, a movable member coupled to the valve body and configured to, when the driving portion operates, apply the driving force to the valve body to cause the valve body to move toward the open position, and a base rod fixed to the case, inserted in the movable member so as to be movable relative to the movable member, and having a supporting surface configured to support the seal rod against pressure of the back pressure chamber, and the supporting surface of the base rod be formed to have a partially spherical shape.

According to the above configuration, the seal rod inserted in the valve body and the base rod fixed to the case are formed separately. Therefore, as compared to a case where the seal rod and the base rod are formed integrally, the processing accuracy of each of the seal rod and the base rod can be reduced. With this, the manufacturing of the gas pressure regulating valve is facilitated. Moreover, since the supporting surface of the base rod is formed to have a partially spherical shape, one-side hitting of the seal rod with respect to the base rod can be prevented, and the seal rod can be supported firmly.

In the above invention, it is preferable that the gas pressure regulating valve be a normally closed valve configured such that when the applied voltage or the applied current applied to the valve body driving unit is zero, the valve body is located at the closed position by the return spring.

According to the above configuration, the valve passage can be urgently shut off by shutting off the supply of the applied voltage or the applied current applied to the valve body driving unit.

### Advantageous Effects of Invention

The present invention can provide a gas pressure regulating valve capable of, even under a high-pressure fuel gas circumstance, more precisely regulating secondary pressure of the high-pressure fuel gas to target pressure and preventing a fuel gas from leaking to the atmosphere.

### Brief Description of Drawings

[Fig. 1] Fig. 1 is a circuit diagram showing the configuration of a fuel gas supply system including an electromagnetic pressure regulating valve of Embodiment 1.
[Fig. 2] Fig. 2 is a cross-sectional view showing the configuration of the electromagnetic pressure regulating valve of Embodiment 1.
[Fig. 3] Fig. 3 is a cross-sectional view showing the configuration of an electromagnetic pressure regulating valve of Embodiment 2.
[Fig. 4] Fig. 4 is a cross-sectional view showing the configuration of an electromagnetic pressure regulating valve of Embodiment 3.
[Fig. 5] Fig. 5 is a cross-sectional view showing the configuration of an electromagnetic pressure regulating valve of Embodiment 4.
[Fig. 6] Fig. 6 is a cross-sectional view showing the configuration of an electromagnetic pressure regulating valve of Embodiment 5.
[Fig. 7] Fig. 7 is a cross-sectional view showing the configuration of an electromagnetic pressure regulating valve of Embodiment 6.
[Fig. 8] Fig. 8 is a cross-sectional view showing the configuration of an electromagnetic pressure regulating valve of Embodiment 7.
[Fig. 9] Fig. 9 is a cross-sectional view showing the configuration of an electromagnetic pressure regulating valve of Embodiment 8.
[Fig. 10] Fig. 10 is a cross-sectional view partially showing the configuration of a pressure regulating valve of Embodiment 9.
[Fig. 11] Fig. 11 is a cross-sectional view partially showing the configuration of an electromagnetic pressure regulating valve of Embodiment 10.

### Description of Embodiments

Hereinafter, pressure regulating valves 1 to 11 according to Embodiments 1 to 10 of the present invention and a fuel gas supply systems 2 including the pressure regulating valve will be explained in reference to the drawings. In the embodiments, the concept of directions, such as upper, lower, left, right, front, and rear directions, is used for convenience of explanation and does not indicate that the configurations, arrangements, directions, and the like of the pressure regulating valves 1 and 1A to 1I and the fuel gas supply system 2 are limited to the directions. In addition, each of the pressure regulating valves 1 and 1A to 1I and the fuel gas supply system 2 is just one embodiment of the present invention, and the present invention is not limited to the embodiments. Additions, eliminations, and modifications may be made within the scope of the present invention.

### Fuel Gas Supply System

A fuel gas supply system 2 is provided at a high-pressure tank 3 configured to store a fuel gas, such as a hydrogen gas or a compressed natural gas, at high pressure. The fuel gas supply system 2 is connected to a fuel gas consuming device, such as a fuel cell or a gas engine, and regulates the pressure of the high-pressure fuel gas to desired low pressure to supply the fuel gas to the fuel gas consuming device. The fuel gas supply system 2 configured as above includes a container master valve 4, a pressure sensor 5, and a calculation controller 6. The container master valve 4 is constituted by an on tank type and is provided at an opening portion of the high-pressure tank 3. The container master valve 4 is not limited to the on tank type and may be constituted by an in tank type. The container master valve 4 includes an electromagnetic pressure regulating valve 1 and an electromagnetic shutoff valve 7.

The electromagnetic shutoff valve 7 is provided on a supply passage 2a connecting the high-pressure tank 3 and the fuel gas consuming device. The electromagnetic shutoff valve 7 is a so-called electromagnetic on-off valve and opens and closes the supply passage 2a in accordance with a signal transmitted thereto. In addition, the electromagnetic pressure regulating valve 1 is provided on the supply passage 2a so as to be located downstream of the electromagnetic shutoff valve 7. The electromagnetic pressure regulating valve 1 regulates the pressure of the high-pressure fuel gas. Further, the pressure sensor 5 is provided on the supply passage 2a so as to be located downstream of the electromagnetic pressure regulating valve 1. The pressure sensor 5 detects the pressure of the fuel gas flowing through the supply passage 2a. The pressure sensor 5 is connected to the calculation controller 6 through a signal wire 8, and a detected pressure signal corresponding to the detected pressure is input to the calculation controller 6. In addition, a target pressure command signal corresponding to target pressure is input to the calculation controller 6 from an input unit, a control device, or the like, not shown.

The calculation controller 6 calculates a difference between the target pressure command signal and the detected pressure signal and supplies to the electromagnetic pressure regulating valve 1 a current having a magnitude corresponding to this difference. The electromagnetic pressure regulating valve 1 regulates the pressure of the high-pressure fuel gas to certain pressure corresponding to the supplied current. Hereinafter, the electromagnetic pressure regulating valve 1 provided in the fuel gas supply system 2 will be explained in detail. Here, the electromagnetic pressure regulating valve 1 of Embodiment 1 is just one example of the electromagnetic pressure regulating valve provided in the fuel gas supply system 2, and there are various embodiments. Hereinafter, the electromagnetic pressure regulating valve 1 of Embodiment 1 and some typical embodiments will be explained in detail.

### Embodiment 1

### Configuration of Electromagnetic Pressure Regulating Valve

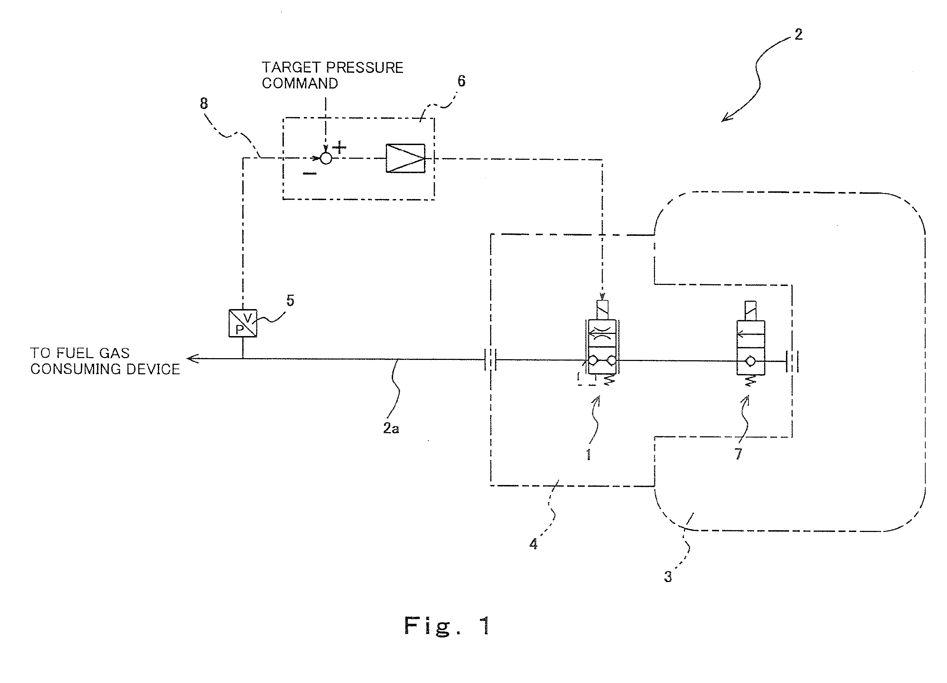

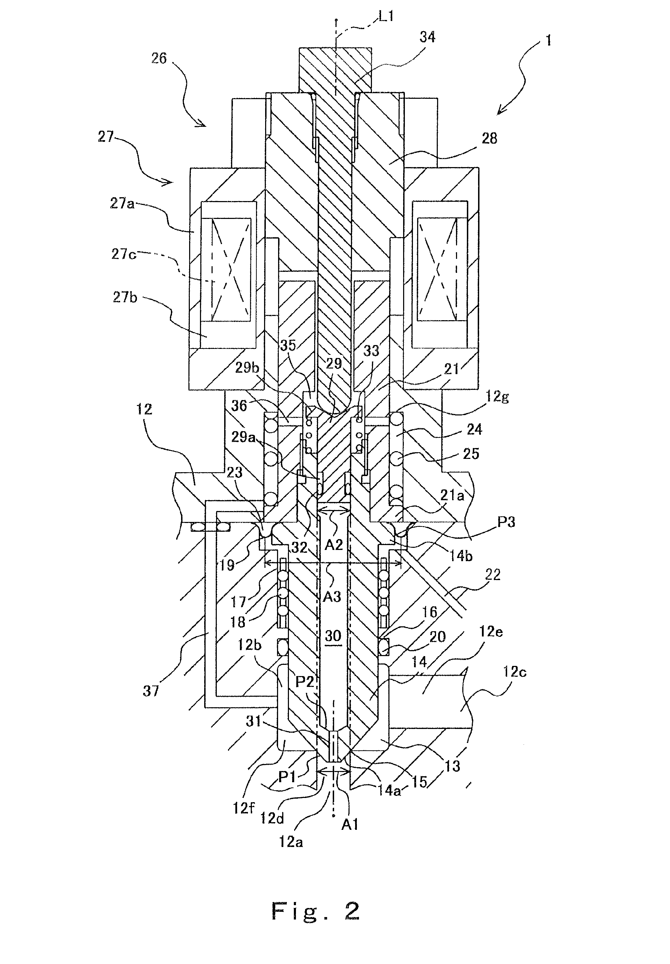

The electromagnetic pressure regulating valve 1 of Embodiment 1 shown in Fig. 2 includes a housing 12. The housing 12 is attached to an opening portion of the high-pressure tank 3 (see Fig. 1) in a sealed state. The housing 12 includes a primary port 12a, a valve body hole 12b, and a secondary port 12c. The primary port 12a is connected to the electromagnetic shutoff valve 7 (see Fig. 1) and is connected to the valve body hole 12b through a primary passage 12d extending along an axis line L1 extending in an upper-lower direction.

The valve body hole 12b extends along the axis line L1. The primary passage 12d is formed at a lower end of the valve body hole 12b, and an upper side of the valve body hole 12b is open. The valve body hole 12b has a circular cross section and is larger in diameter than the primary passage 12d. A secondary passage 12e is connected to a lower end side of the valve body hole 12b. The secondary passage 12e extends in a direction perpendicular to the axis line L1, is connected to the secondary port 12c, and is connected to the fuel gas consuming device through the supply passage 2a (see Fig. 1).

The secondary port 12c provided as above is provided at right angle to the primary port 12a. Thus, the electromagnetic pressure regulating valve 1 is an angle type pressure regulating valve. The primary port 12a and the secondary port 12c are connected to each other through the primary passage 12d, a below-described secondary region 12f of the valve body hole 12b, and the secondary passage 12e. The primary passage 12d, the secondary region 12f, and the secondary passage 12e constitute a valve passage 13.

In the housing 12, an opening portion where the primary passage 12d and the valve body hole 12b are connected to each other forms a seat portion 15. A valve body 14 is inserted in the valve body hole 12b along the axis line L1 such that a tip end portion 14a thereof is seated (pressed) on the seat portion 15. The valve body 14 is formed to have a substantially bottomed cylindrical shape, and the tip end portion 14a has a tapered shape. When the valve body 14 is located at a closed position as shown in Fig. 2, the valve body 14 is seated on the seat portion 15 such that a part of the tip end portion 14a is inserted in the primary passage 12d. Thus, the valve body 14 closes the valve passage 13.

The valve body 14 includes a flange 14b on an outer peripheral portion of a base end side thereof. The flange 14b is formed on the outer peripheral portion of the valve body 14 along the entire periphery of the valve body 14 in the circumferential direction. The housing 12 includes a seal attaching portion 16 which is located on an inner peripheral portion of the housing 12 so as to be opposed to the flange 14b. The seal attaching portion 16 projects in a radially inward direction and is formed above the secondary passage 12e along the entire periphery of the housing 12 in the circumferential direction. The seal attaching portion 16 and the flange 14b are spaced apart from each other in the upper-lower direction. A bearing member accommodating space 17 having a substantially annular shape is formed between the seal attaching portion 16 and the flange 14b. A bearing member 18 is accommodated in the bearing member accommodating space 17.

The bearing member 18 is formed to have a substantially cylindrical shape and is externally attached to the valve body 14 so as to be interposed between the valve body 14 and the housing 12. The bearing member 18 is constituted by a ball guide, a ball. bearing, a slide bearing, or the like and supports the valve body 14 such that the valve body 14 can move relative to the housing 12 along the axis line L1 in the upper-lower direction. The bearing member 18 is lubricated with grease in order to smoothen the movement of the valve body 14 and improve the durability of the bearing member 18. A diaphragm seal 19 and a low-pressure sealing member 20 are respectively provided above and below the bearing member 18.

The diaphragm seal 19 that is a first sealing member is a so-called diaphragm and has a substantially annular shape. An outer edge portion of the diaphragm seal 19 is attached to the housing 12, and an inner edge portion thereof is attached to the flange 14b of the valve body 14. More specifically, the housing 12 is configured to be separable into two parts that are upper and lower portions. The diaphragm seal 19 is attached to the housing 12 such that the outer edge portion of the diaphragm seal 19 is sandwiched between the upper and lower portions of the housing 12. In addition, the diaphragm seal 19 is attached to the valve body 14 such that the inner edge portion of the diaphragm seal 19 is sandwiched between the flange 14b and a flange 21a of a below-described movable core 21. The diaphragm seal 19 attached as above extends between the housing 12 and the valve body 14 to seal between a below-described pressure return chamber 23 and the bearing member accommodating space 17.

The low-pressure sealing member 20 that is a second sealing member is an O ring having a substantially annular shape and is subjected to a surface treatment by, for example, resin in order to reduce the frictional resistance. The low-pressure sealing member 20 is attached to the seal attaching portion 16 so as to seal between the housing 12 and the valve body 14. Thus, the low-pressure sealing member 20 seals between the secondary region 12f located below the seal attaching portion 16 in the valve body hole 12b and the bearing member accommodating space 17.

As above, the diaphragm seal 19 and the low-pressure sealing member 20 respectively seal the upper side and lower side of the bearing member accommodating space 17. Thus, the bearing member accommodating space 17 is separated from the other spaces formed in the housing 12. The housing 12 includes an atmosphere communication passage 22 connected to the bearing member accommodating space 17. The bearing member accommodating space 17 is open to the atmosphere through the atmosphere communication passage 22.

As above, since the bearing member accommodating space 17 is separated from the other spaces formed in the housing 12 and is open to the atmosphere, the grease of the bearing member 18 is not exposed to the fuel gas and does not leak to the other spaces, such as the primary passage 12d and the secondary passage 12e, formed in the housing 12. Therefore, the grease in the bearing member accommodating space 17 can be prevented from drying up, and a state where the bearing member 18 is being lubricated can be maintained. With this, the durability of the bearing member 18 can be improved, and the valve body 14 can be moved smoothly. In addition, the grease can be prevented from leaking and being mixed with the fuel gas.

The movable core 21 is inserted in and threadedly engaged with the base end portion (to be specific, an upper end portion) of the valve body 14. The movable core 21 is made of a magnetic material and is formed to have a substantially cylindrical shape. The movable core 21 extends along the axis line L1 in the upper-lower direction and is supported by an inner peripheral portion of an upper opening side of the housing 12 so as to be movable in the upper-lower direction. The movable core 21 includes the flange 21a at an end portion thereof, the end portion being located on the valve body 14 side. The flange 21a projects in a radially outward direction and is formed on an outer peripheral portion of the movable core 21 along the entire periphery of the movable core 21 in the circumferential direction. The flange 21 a and the flange 14b of the valve body 14 sandwich the inner edge portion of the diaphragm seal 19. The flange 21a extends up to the vicinity of the inner peripheral portion of the housing 12 and is opposed to the diaphragm seal 19. Thus, the pressure return chamber 23 is formed between the flange 21a and the diaphragm seal 19.

The housing 12 includes a spring receiving portion 12g located on an upper side of the flange 21a. A spring accommodating space 24 is formed between the spring receiving portion 12g and the flange 21a. The spring accommodating space 24 has an annular shape so as to surround the outer peripheral portion of the movable core 21. A return spring 25 is accommodated in the spring accommodating space 24 in a compressed state. The return spring 25 is constituted by a compression coil spring and is externally attached to the movable core 21. A lower end of the return spring 25 is received by the flange 21a, and an upper end thereof is received by the spring receiving portion 12g. The return spring 25 provided as above biases the valve body 14 via the movable core 21 toward the closed position.

An electromagnetic proportional solenoid 26 is provided at the upper opening side of the housing 12. The electromagnetic proportional solenoid 26 that is a valve body driving unit is fixed to an outer peripheral portion of the housing 12 and includes a solenoid coil 27 and a fixed magnetic pole 28. The solenoid coil 27 is formed to have a substantially cylindrical shape. The housing 12 is fittingly inserted in the solenoid coil 27 from a lower end side of the solenoid coil 27. The solenoid coil 27 includes a substantially cylindrical case 27a. A bobbin 27b and a coil wire 27c are provided in the case 27a. The bobbin 27b is formed to also have a substantially cylindrical shape. The solenoid coil 27 is constituted by winding the coil wire 27c around the bobbin 27b. By supplying a current to the coil wire 27c, the solenoid coil 27 magnetizes the movable core 21. The fixed magnetic pole 28 is fittingly inserted in an upper end side of the solenoid coil 27.

The fixed magnetic pole 28 is constituted by a magnetic body and is formed to have a substantially cylindrical shape. The fixed magnetic pole 28 is provided such that a lower end side thereof is opposed to the movable core 21. The fixed magnetic pole 28 is located away from the movable core 21 and attracts the movable core 21, magnetized by the solenoid coil 27, by a magnetizing force (driving force) corresponding to the current supplied to the solenoid coil 27. By this attraction, the movable core 21 and the valve body 14 move toward an open position. Thus, the valve passage 13 opens. The open position denotes the position of the valve body 14 when the movable core 21 is attracted toward the fixed magnetic pole 28.

A seal rod 29 is fittingly inserted in the valve body 14. The seal rod 29 is formed to have a substantially columnar shape and closes an opening of the base end side of the valve body 14 to form a back pressure chamber 30 in the valve body 14. A communication passage 31 is formed along the axis line L1 at the tip end portion 14a of the valve body 14. The back pressure chamber 30 is connected to the primary passage 12d through the communication passage 31. A seal groove 29a extending along the entire periphery of the seal rod 29 in the circumferential direction is formed on an outer peripheral portion of a tip end side of the seal rod 29. A high-pressure sealing member 32 having an annular shape is fitted in the seal groove 29a. The high-pressure sealing member 32 that is a third sealing member is a high-pressure seal which is low in frictional resistance and in which a difference between starting resistance and sliding resistance is small. One example of the high-pressure sealing member 32 is an O ring subjected to a surface treatment by, for example, fluorocarbon resin. The high-pressure sealing member 32 seals between the valve body 14 and the seal rod 29 to prevent the fuel gas in the back pressure chamber 30 from leaking from the inside of the valve body 14.

The seal rod 29 includes a spring receiving portion 29b at the outer peripheral portion of a base end side thereof. The spring receiving portion 29b projects in the radially outward direction and is formed on the outer peripheral portion of the seal rod 29 along the entire periphery of the seal rod 29 in the circumferential direction. The spring receiving portion 29b is opposed to the base end portion of the valve body 14. A seal rod spring 33 is provided between the spring receiving portion 29b and the base end portion of the valve body 14 so as to be externally attached to the seal rod 29. The seal rod spring 33 is being compressed and biasing the seal rod 29 in the upper direction. A base rod 34 is provided at the seal rod 29 so as to support the seal rod 29 against the above biasing.

The base rod 34 is formed to have a substantially columnar shape, and a tip end thereof has a partially spherical shape. The base rod 34 is inserted through the fixed magnetic pole 28 from an outer side and is threadedly engaged with the fixed magnetic pole 28 in a sealed state. To be specific, the base rod 34 is fixed to the case 27a via the fixed magnetic pole 28. The base rod 34 extends into the movable core 21, and the tip end thereof contacts an upper end of the seal rod 29 to support the seal rod 29 from an upper side. The upper end of the seal rod 29 is formed to have a tapered shape toward a lower side. The seal rod 29 is automatically aligned by the base rod 34.

The base rod 34 extends up to a lower end side in the movable core 21. The lower end side in the movable core 21 is larger in diameter than an upper end side therein and constitutes a buffer chamber 35. The seal rod 29 is fittingly inserted in the valve body 14 from the buffer chamber 35. An upper end side of the seal rod 29 is located in the buffer chamber 35, and a lower end side thereof is located in the back pressure chamber 30. The high-pressure sealing member 32 provided at the seal rod 29 seals between the two chambers 35 and 30. Thus, the fuel gas is prevented from leaking from the back pressure chamber 30 to the buffer chamber 35.

A plurality of communication passages 36 connecting the buffer chamber 35 and the spring accommodating space 24 are formed in the movable core 21. A pressure return passage 37 connecting the spring accommodating space 24 and the secondary region 12f of the valve body hole 12b is formed in the housing 12. To be specific, the buffer chamber 35 is connected through the communication passages 36, the spring accommodating space 24, and the pressure return passage 37 to the secondary region 12f and the secondary port 12c located beyond the secondary region 12f. With this, even if the fuel gas leaks from the back pressure chamber 30 to the buffer chamber 35, the fuel gas returns to the secondary region 12f. To be specific, the electromagnetic pressure regulating valve 1 is configured as a valve having a safety structure by which the fuel gas having leaked from the primary side can be returned to the secondary side without causing the leakage to the outside.

The buffer chamber 35 is also connected to a space between the movable core 21 and the fixed magnetic pole 28 through a gap between the movable core 21 and the base rod 34. With this, secondary pressure is introduced to between the movable core 21 and the fixed magnetic pole 28, and the secondary pressure acting on the valve body 14 is canceled. The spring accommodating space 24 is connected to the pressure return chamber 23 through a gap between the flange 21a of the movable core 21 and the housing 12, and secondary pressure p₂ is introduced to the pressure return chamber 23. The diaphragm seal 19 receives the secondary pressure p₂ introduced to the pressure return chamber 23 and causes the valve body 14 to move in a close direction by a force corresponding to the secondary pressure p₂.

In the valve body 14 which moves in the close direction in accordance with the secondary pressure p₂ as above, a pressure receiving surface P1 of the tip end portion 14a receives primary pressure p₁ of the primary passage 12d in the upper direction (a direction from the closed position to the open position), and a pressure receiving surface P2 in the valve body 14 receives the primary pressure p₁, having been introduced to the back pressure chamber 30, in the lower direction (a direction from the open position to the closed position). Therefore, an acting force received by the pressure receiving surface P1 and an acting force received by the pressure receiving surface P2 cancel each other. A pressure receiving area A1 of the pressure receiving surface P1 is determined depending on an inner diameter of the seat portion 15, that is, a seat diameter. A pressure receiving area A2 of the pressure receiving surface P2 is determined depending on a hole diameter of the back pressure chamber 30. In the present embodiment, the housing 12 and the valve body 14 are formed such that the seat diameter and the hole diameter are equal to each other. Therefore, in the electromagnetic pressure regulating valve 1 of the present embodiment, the acting force received by the pressure receiving surface P1 and the acting force received by the pressure receiving surface P2 cancel each other.

A pressure receiving area A3 of the diaphragm seal 19 is larger than each of the pressure receiving areas A1 and A2 and adequately receives the secondary pressure p₂. Therefore, a pressure receiving area of a pressure receiving surface P3 which is located at the base end side of the valve body 14 and receives the secondary pressure p₂ in the direction toward the closed position is larger than a pressure receiving area of a pressure receiving surface P4 which is located at the tip end side of the valve body 14 and receives the secondary pressure p₂ in the direction toward the open position. On this account, in a state where the valve body 14 is pushed toward the closed position by the secondary pressure p₂ and the return spring 25 and the current is not flowing through the solenoid coil 27, the valve body 14 is located at the closed position. To be specific, the electromagnetic pressure regulating valve 1 is constituted as a normally closed valve. Thus, the valve passage 13 can be urgently shut off by shutting off the supply of the current to the solenoid coil 27.

### Operations of Electromagnetic Pressure Regulating Valve

Hereinafter, operations of the electromagnetic pressure regulating valve 1 will be explained in reference to Fig. 2. When the current is supplied to the solenoid coil 27 of the electromagnetic proportional solenoid 26, the magnetizing force acts on the movable core 21, and the movable core 21 is attracted toward the fixed magnetic pole 28. With this, the valve body 14 is separated from the seat portion 15 to move toward the open position. Thus, the valve passage 13 opens. By opening the valve passage 13, an orifice (not shown) is formed between the valve body 14 and the seat portion 15. The pressure of the fuel gas is reduced to the secondary pressure p₂ by this orifice, and the fuel gas flows to the secondary region 12f.

The fuel gas in the secondary region 12f flows through the secondary passage 12e to be discharged through the secondary port 12c and also flows through the pressure return passage 37 and the spring accommodating space 24 to be introduced to the pressure return chamber 23. The diaphragm seal 19 receives the secondary pressure p₂ of the fuel gas introduced to the pressure return chamber 23. The valve body 14 moves toward the closed position or the open position to a position where the magnetizing force received by the movable core 21, the acting force generated by the secondary pressure p₂ received by the pressure receiving surface P3, and the spring force of the return spring 25 are balanced. To be specific, in order to balance the above forces, the opening degree of the valve passage 13 (to be specific, the opening degree of the orifice) is adjusted. Thus, the secondary pressure p₂ of the fuel gas flowing to the secondary region 12f is adjusted. With this, the secondary pressure p₂ becomes pressure (to be specific, target pressure) corresponding to the current supplied to the solenoid coil 27.

For example, in a case where the secondary pressure p₂ is lower than the target pressure, the magnetizing force is higher than the acting force generated by the secondary pressure p₂, and the valve body 14 moves in a direction away from the seat portion 15 (to be specific, in the direction toward the open position). In this case, the opening degree of the valve passage 13 increases, and the secondary pressure p₂ increases. The valve body 14 regulates the secondary pressure p₂ to the target pressure at the position (opening degree) where the magnetizing force, the acting force generated by the secondary pressure p₂, and the spring force of the return spring 25 are balanced. Therefore, even if the primary pressure p₁ changes, the electromagnetic pressure regulating valve 1 can control the opening degree of the valve passage 13 in accordance with the change in the primary pressure p₁ to regulate the secondary pressure p₂ to the target pressure. On this account, even if the primary pressure p₁ is not reduced to certain pressure in advance, the pressure of the high-pressure fuel gas can be reduced and regulated to predetermined low pressure, that is, the target pressure only by the electromagnetic pressure regulating valve 1. Therefore, the electromagnetic pressure regulating valve 1 is high in pressure controllability.

In the electromagnetic pressure regulating valve 1, by introducing the primary pressure p₁ to the back pressure chamber 30, the acting force generated by the primary pressure p₁ received by the pressure receiving surface P1 and the acting force generated by the primary pressure p₁ received by the pressure receiving surface P2 cancel each other. With this, the change in the secondary pressure p₂ due to the change in the primary pressure p₁ can be suppressed. Therefore, the pressure controllability with respect to the high-pressure fuel gas can be improved, and the electromagnetic pressure regulating valve 1 can control the secondary pressure p₂ more precisely than the conventional electromagnetic pressure regulating valves. By canceling the acting forces generated by the primary pressure p₁, the magnetizing force of the electromagnetic proportional solenoid 26 can be reduced, and the electromagnetic pressure regulating valve 1 can be reduced in size.

In the electromagnetic pressure regulating valve 1, the differential pressure between the primary pressure p₁ and the secondary pressure p₂ is high. Therefore, when the valve body 14 moves, the fuel gas may slightly leak from the back pressure chamber 30 to the buffer chamber 35. However, the electromagnetic pressure regulating valve 1 has the safety structure by which the fuel gas having leaked to the buffer chamber 35 is returned to the secondary side, that is, to the spring accommodating space 24, the pressure return chamber 23, the secondary region 12f, and the like. Therefore, the fuel gas is not discharged to the outside of the electromagnetic pressure regulating valve 1. To be specific, the fuel gas does not leak to the atmosphere.

By adopting the diaphragm seal 19, the sliding friction generated when the valve body 14 moves can be eliminated. In addition, by adopting the low-pressure sealing member 20 which is low in the frictional resistance, the sliding friction can be suppressed as much as possible. The valve body 14 can be caused to move smoothly by suppressing the sliding friction acting on the valve body 14 as above. With this, the secondary pressure p₂ can be quickly regulated to the target pressure. Thus, the responsiveness of the secondary pressure p₂ is improved. Further, by adopting the high-pressure sealing member 32, the pressure resistance of the electromagnetic pressure regulating valve 1 with respect to the primary pressure p₁ is improved, and the limit pressure of the primary pressure supplied through the primary port 12a can be improved.

The seal rod 29 and the base rod 34 inserted in the valve body 14 are formed separately. Therefore, as compared to a case where the seal rod 29 and the base rod 34 are formed integrally, the processing accuracy of each of the seal rod 29 and the base rod 34 can be reduced. With this, the manufacturing of the electromagnetic pressure regulating valve 1 is facilitated. Moreover, since the tip end of the base rod 34 is formed to have a partially spherical shape, one-side hitting of the seal rod 29 with respect to the base rod 34 can be prevented, and the seal rod 29 can be supported firmly.

In the fuel gas supply system 2, the electromagnetic shutoff valve 7 is provided upstream of the electromagnetic pressure regulating valve 1. With this, these two valves 1 and 7 each having the shutoff function can shut off communication between the high-pressure tank 3 and the fuel gas consuming device. On this account, the safety of the fuel gas supply system 2 is improved. By providing the electromagnetic pressure regulating valve 1 at the opening portion of the high-pressure tank 2, the pressure level output from the high-pressure tank 3 becomes low, and the safety of the fuel gas supply system 2 is improved significantly.

### Embodiment 2

An electromagnetic pressure regulating valve 1A according to Embodiment 2 of the present invention is similar in configuration to the electromagnetic pressure regulating valve 1 according to Embodiment 1. Herein, only components of the configuration of the electromagnetic pressure regulating valve 1A according to Embodiment 2 different from components of the electromagnetic pressure regulating valve 1 according to Embodiment 1 will be explained. The same reference signs are used for the same components, and explanations thereof are omitted. The same is true for Embodiment 3 and subsequent embodiments.

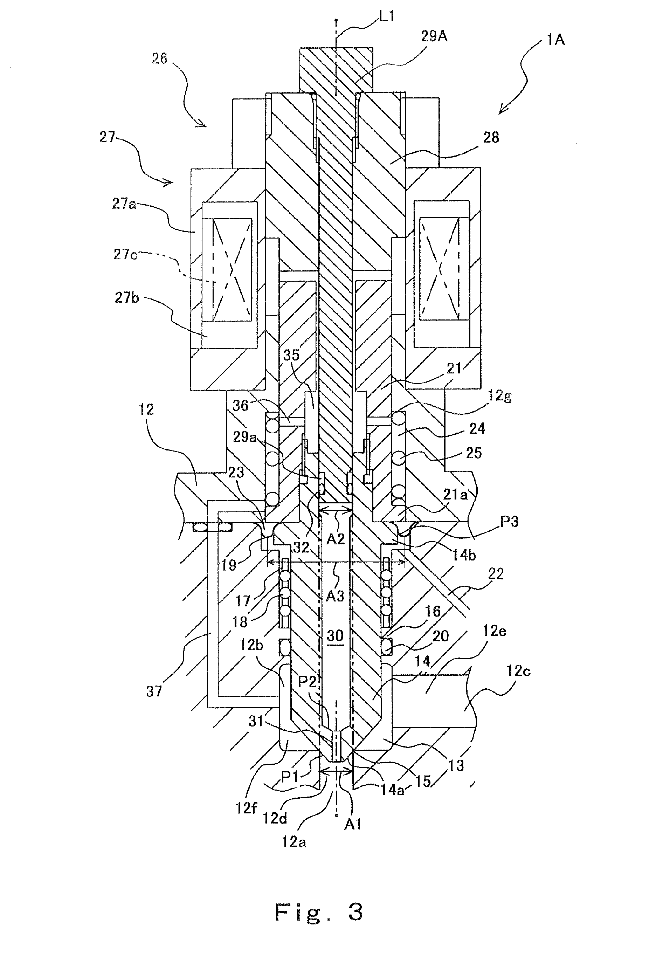

In the electromagnetic pressure regulating valve 1A according to Embodiment 2 of the present invention, as shown in Fig. 3, a seal rod 29A extends up to the fixed magnetic pole 28 and is fixed to the fixed magnetic pole 28. To be specific, the seal rod 29A is configured such that the seal rod 29 and the base rod 34 in Embodiment 1 are integrally formed. With this, the number of components can be reduced, and the manufacturing cost can be reduced.

The electromagnetic pressure regulating valve 1A according to Embodiment 2 has the same operational advantages as the electromagnetic pressure regulating valve 1 according to Embodiment 1.

### Embodiment 3

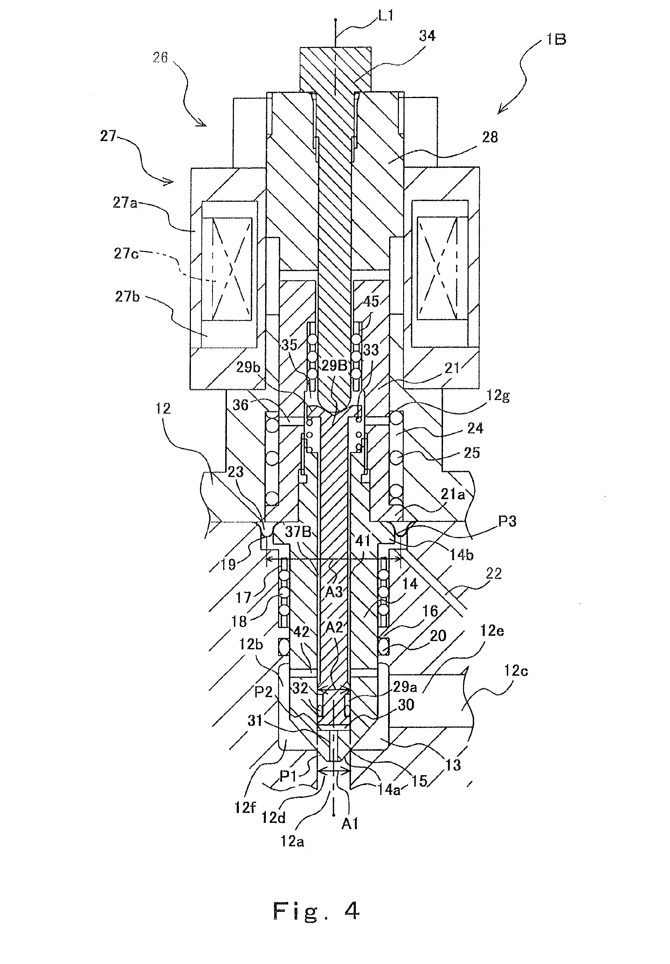

In an electromagnetic pressure regulating valve 1B according to Embodiment 3, as shown in Fig. 4, a pressure return passage 37B is formed in the valve body 14. More specifically, in the electromagnetic pressure regulating valve 1B, a lower end portion of a seal rod 29B is located in the vicinity of a bottom surface in the valve body 14, and a portion above the seal groove 29a is smaller in diameter than the other portion of the seal rod 29B. With this, a passage 41 is formed between an inner peripheral portion of the valve body 14 and an inner peripheral portion of the seal rod 29B. A connection passage 42 connecting the passage 41 and the secondary region 12f is formed on a portion of the valve body 14, the portion being located on the tip end portion 14a side. The connection passage 42 and the passage 41 constitute the pressure return passage 37B. The pressure return passage 37B connects the secondary region 12f and the buffer chamber 35 and returns the fuel gas, having leaked to the buffer chamber 35, to the secondary region 12f. By forming the pressure return passage 37B in the valve body 14 as above, the formation of the pressure return passage 37 in the housing 12 becomes unnecessary. Thus, the processing of the housing 12 is facilitated.

A bearing member 45 is interposed between the base rod 34 and the movable core 21. The movable core 21 is guided by the base rod 34 via the bearing member 18 and moves smoothly along the axis line L1.

The electromagnetic pressure regulating valve 1B according to Embodiment 3 has the same operational advantages as the electromagnetic pressure regulating valve 1 according to Embodiment 1.

### Embodiment 4

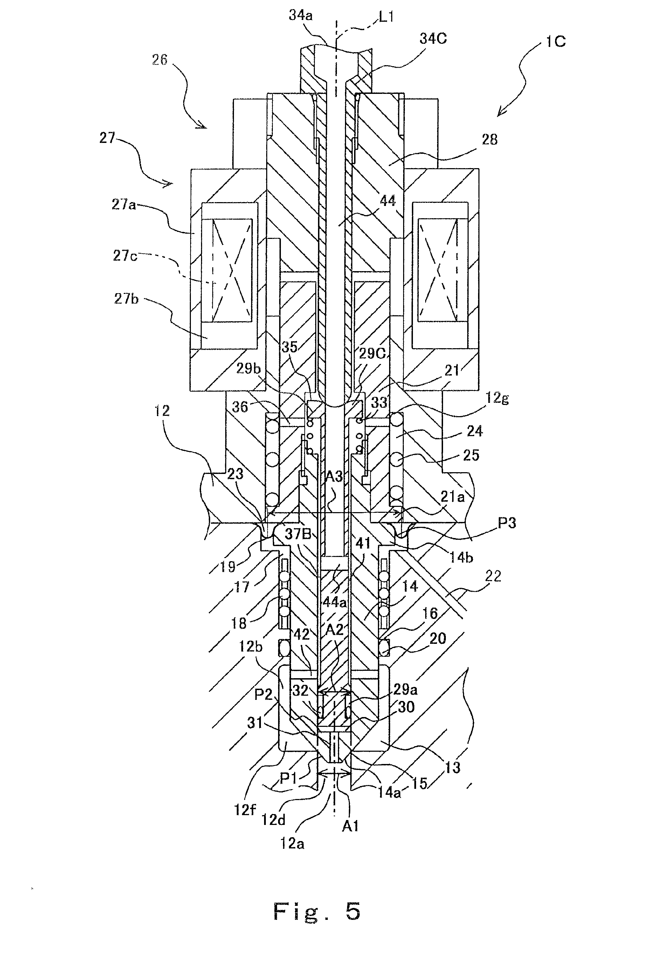

As with the electromagnetic pressure regulating valve 1B according to Embodiment 3, in an electromagnetic pressure regulating valve 1C according to Embodiment 4 of the present invention, the pressure return passage 37B is formed in the valve body 14 as shown in Fig. 5. In addition, in the electromagnetic pressure regulating valve 1C, a secondary port 34a is formed in a base rod 34C. In order to connect the secondary port 34a and the pressure return passage 37B, a secondary passage 44 is formed in the base rod 34C and the seal rod 29C. The secondary passage 44 penetrates the base rod 34C along the axis line L1 and extends up to an intermediate portion of the seal rod 29C. The secondary passage 44 includes at a lower end thereof a connection passage portion 44a extending in the radial direction and is connected to the pressure return passage 37B through the connection passage portion 44a.

The electromagnetic pressure regulating valve 1C is a straight type (in-line type) pressure regulating valve in which the primary port 12a and the secondary port 34a are arranged on the same straight line. Since the electromagnetic pressure regulating valve 1C is the straight type pressure regulating valve, input and output pipes and the like can be provided along the axis line L1.

The electromagnetic pressure regulating valve 1C according to Embodiment 4 has the same operational advantages as the electromagnetic pressure regulating valve 1 according to Embodiment 1.

### Embodiments 5 to 8

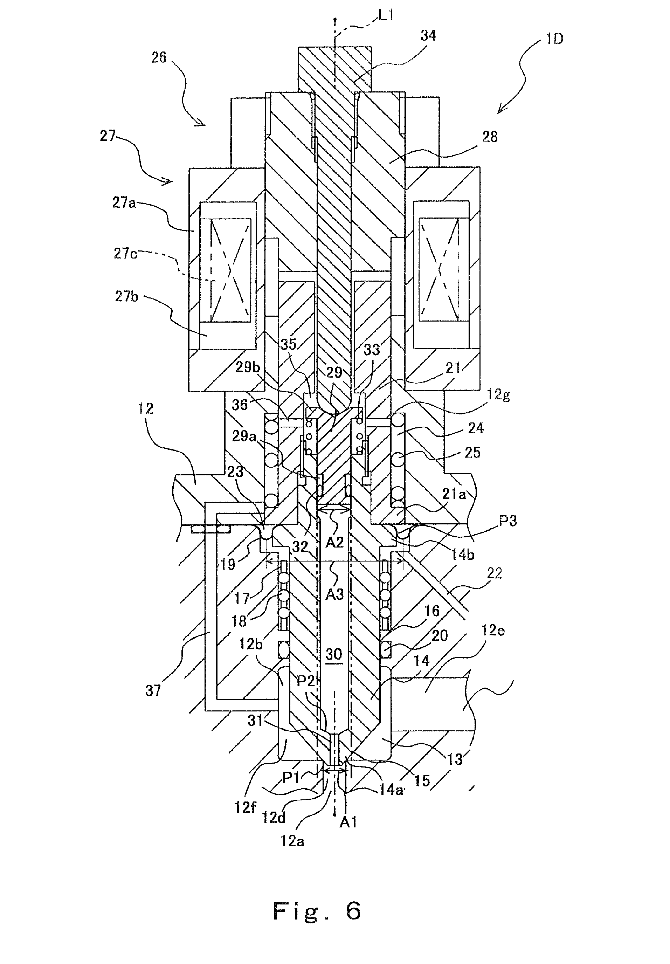

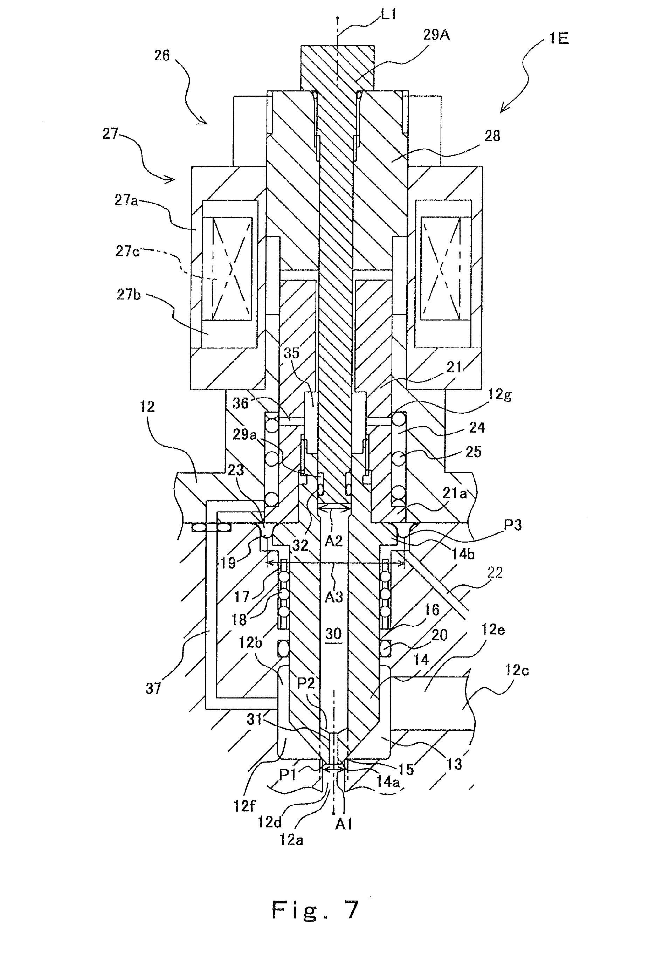

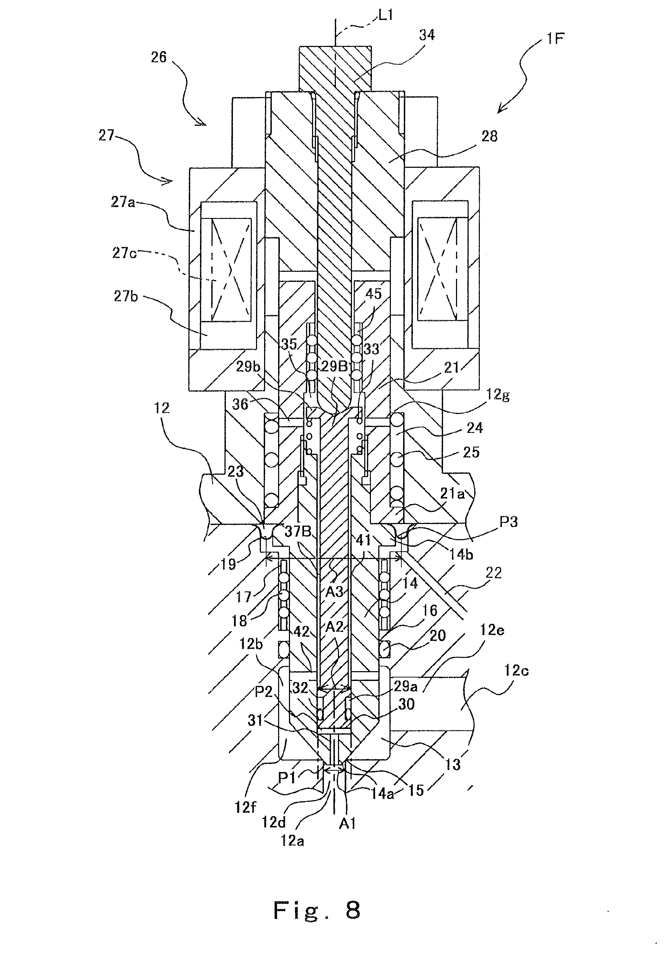

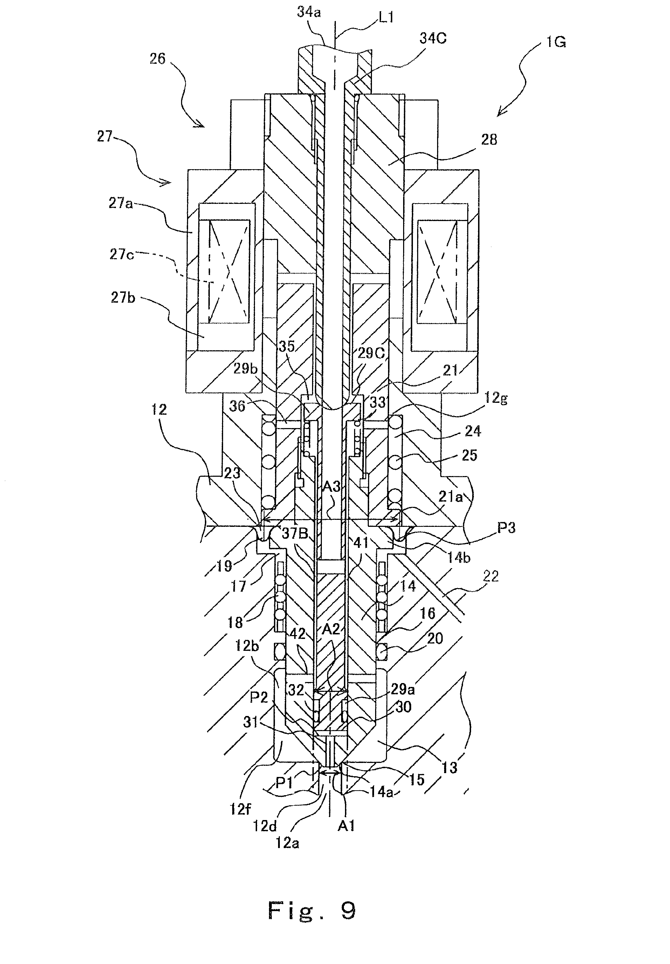

As shown in Figs. 6 to 9, electromagnetic pressure regulating valves ID to 1G according to Embodiments 5 to 8 of the present invention are respectively the same as the electromagnetic pressure regulating valves 1 to 1C according to 1 Embodiments 1 to 4 except for the pressure receiving area A1 and the pressure receiving area A2. Hereinafter, only the pressure receiving area A1 and the pressure receiving area A2 will be explained.

In each of the electromagnetic pressure regulating valves 1D to 1G, the valve body 14 and the housing 12 are formed such that the seat diameter is smaller than the hole diameter of the back pressure chamber 30. In addition, the pressure receiving area A1 is smaller than the pressure receiving area A2. Therefore, the acting force generated by the primary pressure p₁ corresponding to the area difference between the pressure receiving area A1 and the pressure receiving area A2 acts on the valve body 14 toward the closed position. On this account, the speed of the valve body 14 moving toward the closed position when the supply of the current to the solenoid coil 27 is shut off increases, and the shutoff performance is improved.

Since the acting force generated by the primary pressure p₁ acts on the valve body 14 toward the closed position, sealing surface pressure between the valve body 14 and a seat portion of the seat portion 15 increases. Therefore, each of the electromagnetic pressure regulating valves 1D to 1G can firmly close the valve passage 13 so as to prevent the fuel gas from leaking from the primary side to the secondary side.

Each of the electromagnetic pressure regulating valves 1D to 1G according to Embodiments 5 to 8 has the same operational advantages as the electromagnetic pressure regulating valve 1 according to Embodiment 1.

### Embodiment 9

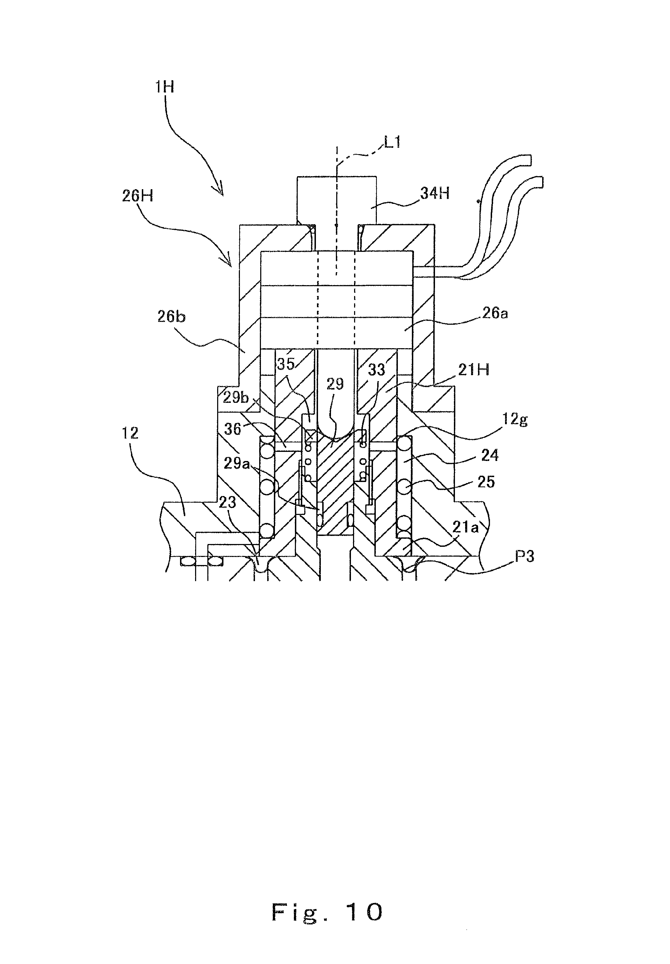

As shown in Fig. 10, a pressure regulating valve 1H according to Embodiment 9 includes a piezoelectric actuator 26H instead of the electromagnetic proportional solenoid 26. The piezoelectric actuator 26H that is the valve body driving unit includes a piezoelectric element 26a (for example, a piezo element). The piezoelectric element 26a contracts in accordance with the applied voltage to generate the driving force. By the contraction of the piezoelectric element 26a as above, the valve body 14 moves in the direction (upper direction) toward the open position via a movable member 21H. Thus, the valve passage 13 opens. At this time, the opening degree of the valve passage 13 corresponds to the generated driving force, and the pressure regulating valve 1H can regulate the secondary pressure p₂ to pressure corresponding to the applied voltage applied to the piezoelectric actuator 26H.

Further, in the pressure regulating valve 1H, a base rod 34H is threadedly engaged with and fixed to a case 26b of the piezoelectric actuator 26H. The base rod 34H penetrates the case 26b and the piezoelectric element 26a and further penetrates the movable member 21H. A tip end of the base rod 34H contacts an upper end of the seal rod 29 and supports the seal rod 29 from the upper side.

Other than the above, the pressure regulating valve 1H according to Embodiment 9 is the same in configuration as the electromagnetic pressure regulating valve 1 according to Embodiment 1. Thus, the pressure regulating valve 1H according to Embodiment 9 has the same operational advantages as the electromagnetic pressure regulating valve 1 according to Embodiment 1.

### Embodiment 10

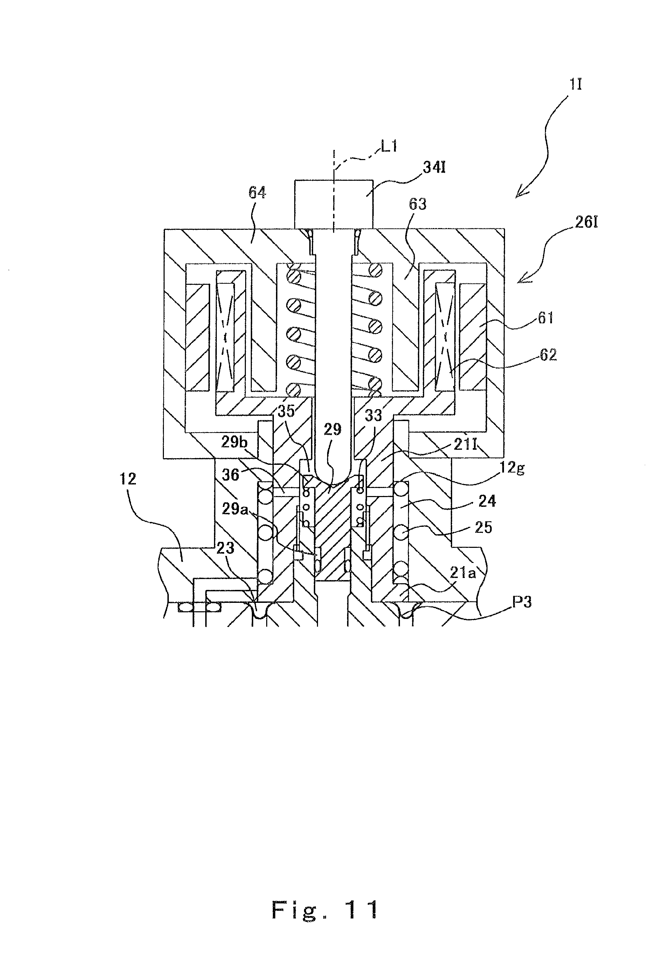

As shown in Fig. 11, a pressure regulating valve 1I according to Embodiment 10 includes a force motor 26I instead of the electromagnetic proportional solenoid 26. The force motor 26I that is the valve body driving unit is configured such that a moving coil 62 is inserted in a cylindrical permanent magnet 61. When the current is supplied to the moving coil 62, the magnetizing force corresponding to the supplied current is generated. By this magnetizing force, the moving coil 62 moves in a yoke 63 in the upper direction. The moving coil 62 is formed integrally with a movable member 21I. By the movement of the moving coil 62, the valve body 14 moves in the direction toward the open position. Thus, the valve passage 13 opens. At this time, the opening degree of the valve passage 13 corresponds to the generated magnetizing force, and the pressure regulating valve 1I can regulate the secondary pressure p₂ to pressure corresponding to the current supplied to the force motor 26I.

Further, in the pressure regulating valve 1I, the base rod 34I is threadedly engaged with and fixed to a case 64 of the force motor 26I. The base rod 34I penetrates the case 64 and the moving coil 62 and further penetrates the movable member 21I. A tip end of the base rod 34I contacts the upper end of the seal rod 29 and supports the seal rod 29 from the upper side.

Other than the above, the pressure regulating valve 1I according to Embodiment 10 is the same in configuration as the electromagnetic pressure regulating valve 1 according to Embodiment 1. Thus, the pressure regulating valve 1I according to Embodiment 10 has the same operational advantages as the electromagnetic pressure regulating valve 1 according to Embodiment 1.

### Other Embodiment

In the present embodiment, the secondary pressure p₂ of the pressure return chamber 23 is received by the diaphragm seal 19. However, the present embodiment is not limited to the diaphragm seal, and the secondary pressure p₂ may be received by a low-pressure sealing member, such as an O ring.

### Industrial Applicability

The present invention is applicable to a gas pressure regulating valve configured to regulate the pressure of a high-pressure fuel gas to pressure corresponding to an applied voltage or an applied current.

### Reference Signs List

| | |
|---|---|
| 1 to 1G | electromagnetic pressure regulating valve |
| 1H, 1I | pressure regulating valve |
| 2 | fuel gas supply system |
| 7 | electromagnetic shutoff valve |
| 12 | housing |
| 12a | primary port |
| 12c | secondary port |
| 13 | valve passage |
| 14 | valve body |
| 18 | bearing member |
| 19 | diaphragm seal |
| 20 | low-pressure sealing member |
| 23 | pressure return chamber |
| 25 | return spring |
| 26 | electromagnetic proportional solenoid |
| 26H | piezoelectric actuator |
| 26I | force motor |
| 29 to 29C | seal rod |
| 30 | back pressure chamber |
| 32 | high-pressure sealing member |
| 34 to 34C, 34H, 34I | base rod |
| 35 | buffer chamber |

## Claims

1. A gas pressure regulating valve comprising:
a housing including a valve passage connected to a primary port and a secondary port;
a valve body provided in the housing and configured to move between a closed position where the valve body closes the valve passage and an open position where the valve body opens the valve passage to adjust an opening degree of the valve passage;
a return spring configured to bias the valve body in a direction toward the closed position; and
a valve body driving unit configured to apply a driving force corresponding to an applied voltage or an applied current to the valve body against the biasing of the return spring to cause the valve body to move in a direction toward the open position,
the gas pressure regulating valve being configured to regulate pressure of a high-pressure fuel gas, supplied through the primary port to the valve passage, to pressure corresponding to the driving force of the valve body driving unit to output the fuel gas through the secondary port,
the gas pressure regulating valve comprising:
a pressure return chamber formed in the housing and connected to the secondary port;
a bearing member provided in a gap between the valve body and the housing and configured to slidingly support the valve body;
first and second sealing members respectively provided on both sides of the bearing member and configured to respectively seal both sides of the gap; and
a seal rod inserted in the valve body so as to be movable relative to the valve body and configured to form a back pressure chamber connected to the primary port, the back pressure chamber being formed between the seal rod and the valve body, wherein:
the first sealing member receives pressure of the pressure return chamber in a direction against the driving force and causes the valve body to move toward the closed position in accordance with the received pressure;
the housing includes a buffer chamber connected to the secondary port; and
the third sealing member is provided so as to seal between the back pressure chamber and the buffer chamber.

2. The gas pressure regulating valve according to claim 1, wherein:
the valve body includes a first pressure receiving surface configured to receive primary pressure at the primary port toward the open position and a second pressure receiving surface configured to receive pressure of the back pressure chamber toward the closed position; and
a pressure receiving area of the first pressure receiving surface is equal to a pressure receiving area of the second pressure receiving surface.

3. The gas pressure regulating valve according to claim 1, wherein:
the valve body includes a first pressure receiving surface configured to receive primary pressure at the primary port toward the open position and a second pressure receiving surface configured to receive pressure of the back pressure chamber toward the closed position; and
a pressure receiving area of the first pressure receiving surface is smaller than a pressure receiving area of the second pressure receiving surface.

4. The gas pressure regulating valve according to any one of claims 1 to 3, wherein:
the first sealing member is a diaphragm seal; and
the second sealing member is a low-pressure seal having low frictional resistance.

5. The gas pressure regulating valve according to any one of claims 1 to 4, wherein the third sealing member is a high-pressure seal which has low frictional resistance and in which a difference between starting resistance and sliding resistance is small.

6. The gas pressure regulating valve according to any one of claims 1 to 5, wherein:
the valve body driving unit includes
a driving portion configured to operate in accordance with an applied voltage or an applied current,
a case configured to accommodate the driving portion,
a movable member coupled to the valve body and configured to, when the driving portion operates, apply the driving force to the valve body to cause the valve body to move toward the open position, and
a base rod fixed to the case, inserted in the movable member so as to be movable relative to the movable member, and having a supporting surface configured to support the seal rod against pressure of the back pressure chamber; and
the supporting surface of the base rod is formed to have a partially spherical shape.

7. The gas pressure regulating valve according to any one of claims 1 to 6, wherein the gas pressure regulating valve is a normally closed valve configured such that when the applied voltage or the applied current applied to the valve body driving unit is zero, the valve body is located at the closed position by the return spring.
